# EUROPÄISCHE PATENTSCHRIFT

(11) **EP 4 099 525 B1**
(45) Veröffentlichungstag und Bekanntmachung des Hinweises auf die Patenterteilung: **10.04.2024**
(21) Anmeldenummer: 22178421.8
(22) Anmeldetag: 07.07.2017
(51) Int. Cl.: H02G 1/06, H02G 9/02

(54) **VORRICHTUNG UND VERFAHREN ZUM EINBRINGEN EINER ZUSATZEINRICHTUNG IN DEN BODEN**
METHOD AND DEVICE FOR INSERTING AN ADDITIONAL DEVICE INTO THE GROUND
DISPOSITIF ET PROCÉDÉ D'INTRODUCTION D'UN DISPOSITIF SUPPLEMENTAIRE SOUTERRAIN DANS LE SOL

(30) Priorität: 07.07.2016 DE 102016008203
(43) Veröffentlichungstag der Anmeldung: 07.12.2022
(62) Teilanmeldung aus: 17180330.7
(73) Patentinhaber: HERRENKNECHT AKTIENGESELLSCHAFT, 77963 Schwanau (DE)
(72) Erfinder: Peters, Marc, 79108 Freiburg (DE)
(74) Vertreter: Klickow & Wetzel PartGmbB

(56) Entgegenhaltungen:
- AT-A4- 509 086
- DE-A1- 3 335 651
- DE-A1- 19 928 682
- FR-A1- 2 627 025
- GB-A- 2 259 103

## Beschreibung

Die Erfindung betrifft eine Vorrichtung zum Einbringen einer Zusatzeinrichtung im Boden im Wesentlichen parallel beabstandet zu einer Rohrleitung außerhalb dieser beim Einbringen der Rohrleitung in den Boden von einem Startpunkt zu einem Zielpunkt entlang einer vorgegebenen Verlegelinie, insbesondere beim oberflächennahen Verlegen von Rohrleitungen in Form von Erdkabeln oder Erdleitungen im Boden, mit einem Gehäuse, das sich beim Einbringen der Rohrleitung im Boden befindet, mit einem Verdrängungselement zum abschnittweise Verdrängen des Bodens zum Bereitstellen einer temporären Öffnung im Boden zum Einlegen der Zusatzeinrichtung, wobei das Verdrängungselement an dem Gehäuse angeordnet ist, und wobei das Verdrängungselement eine Führung zum Führen und Abgeben der Zusatzeinrichtung aufweist, und mit einem Speicher auf dem die Zusatzeinrichtung anordbar ist, wobei die Zusatzeinrichtung aus dem Gehäuse heraus der Führung zuführbar ist, sowie ein Verfahren dazu.

Als Zusatzeinrichtung beim Verlegen von Rohrleitungen bezeichnet man beispielsweise eine Rohrleitung oder eine Steuerleitung. Hierbei kann es sich beispielsweise um Be- oder Entlüftungsleitungen und dergleichen handeln. Die Zusatzeinrichtung wird beispielsweise oberhalb der zu verlegenden Rohre oder Kabel im Erdboden angeordnet.

Derartige Zusatzeinrichtungen werden beim Einbringen der Leitungen/Kabel, wenn dieses in offener Bauweise erfolgt, oberhalb der Trasse in den Boden eingelegt.

Aus der DE 196 23 922 C1 und der DE 33 35 561 A1 sind Vorrichtungen zum Einbringen eines Trassenbands im Boden bekannt. Dabei wird mittels eines Schwertes und eines Verdrängungskopfes eine Leitung in den Boden eingebracht, in dem beispielsweise ein oberirdisches Fahrzeug entlang der Verlegetrasse von einem Start- zu einem Zielpunkt fährt. Hinter dem Schwert ist eine Führung vorgesehen, die mit dem Verdrängungskopf verbunden ist. Die Führung reicht vom Verdrängungskopf bis über die Oberfläche des Bodens hinaus. Im Endbereich der Führung ist eine Trommel vorgesehen, auf der Trassenband aufgetrommelt vorliegt. Die Führung weist einen Kanal auf, in dem das Trassenband oberirdisch eingefädelt wird und an einem Austrag oberhalb der zu verlegenden Rohrleitung in den Boden abgegeben wird.

Nachteilig hierbei ist, dass, auch wenn die Beeinflussung des Bodens im Vergleich zu einer offenen Verlegung, reduziert wird, durch das Schwert und auch durch das Befahren des Fahrzeugs an der Oberfläche eine Beeinträchtigung des Bodens stattfindet. Weiterhin ist es mit dieser Vorrichtung nur schwerlich möglich, größere Verlegetiefen und damit größere Überdeckungen oberhalb der zu verlegenden Rohrleitung zu erreichen. Weiterhin ist bei größeren Verlegetiefen ein entsprechend größeres Gerät einzusetzen, was dann zu erheblichen Bodenverdichtungen im Verlegebereich führt.

Aufgabe der Erfindung ist es, eine Möglichkeit bereitzustellen, eine Zusatzeinrichtung parallel zur zu verlegenden Rohrleitung einzubringen, ohne dass die zuvor genannten Nachteile entstehen.

Die Aufgabe der Erfindung wird hinsichtlich der Vorrichtung dadurch gelöst, dass das das Gehäuse so ausgeführt ist, dass es während des Einbringens der Rohrleitung verbindungsfrei zur darüberliegenden Oberfläche des Bodens ist, dass der Speicher im Gehäuse, in der zu verlegenden Rohrleitung oder in einem Bereich des Startpunkts angeordnet ist, und dass die Führung so angeordnet ist, dass die Zusatzeinrichtung direkt oberhalb der Rohrleitung abgebbar ist.

Hierdurch ist es möglich, ein vollständig unterirdisches Verlegungsverfahren anzuwenden, und gleichzeitig, entweder während des Bohrens oder beim Einbringen der Rohrleitung in den Boden, auch eine Zusatzeinrichtung entsprechend vorzusehen. Weiterhin kann auf diese Weise kann die Zusatzeinrichtung einfach der Einführöffnung der Führung zugeführt werden, um auf einfache Weise eine notwendige temporäre Öffnung zu schaffen.

Eine weitere Lehre der Erfindung sieht vor, dass es sich bei dem Gehäuse um ein Rohrelement, eine Vorrichtung zum Erstellen einer Öffnung im Boden, bevorzugt eine Bohrvorrichtung, oder einen Zugkopf handelt. Hierdurch wird es möglich, dass die Zusatzeinrichtung entweder beim Erstellen der Öffnung oder beim Einbringen der Rohrleitung vorzusehen. Dabei ist vorteilhaft, dass der Zugkopf einen ersten Anschluss für die zu verlegende Rohrleitung und einen zweiten Anschluss für Bohrrohre für eine Vorrichtung zum Erstellen einer Öffnung im Boden, bevorzugt eine Bohrvorrichtung, aufweist. Hierbei ist es besonders vorteilhaft, wenn die gesamte Vorrichtung entsprechend im Zugkopf untergebracht ist.

Eine weitere Lehre der Erfindung sieht vor, dass die Führung im Inneren des Verdrängungselements vorgesehen ist. Eine bevorzugte Ausführungsform des Verdrängungselements ist dabei ein Schwert oder Pflug.

Eine weitere Lehre der Erfindung sieht vor, dass die Führung eine Abgabeöffnung aufweist, die die entgegen einer Bewegungsrichtung der erfindungsgemäßen Vorrichtung weist. Dabei es ist vorteilhaft, wenn das Verdrängungselement auf seiner Rückseite diese Abgabeöffnung aufweist. Weiterhin ist es vorteilhaft, wenn der Abstand der Abgabeöffnung in Bezug auf das Gehäuse einstellbar ist, um so den Abstand der Zusatzeinrichtung zur Rohrleitung variieren zu können. Vorteilhaft ist weiterhin, wenn im Bereich der Abgabeöffnung das Verdrängungselement so ausgeführt ist, dass eine optimale Abgabe der Zusatzeinrichtung erfolgen kann. Hierbei kann bevorzugt in diesem Bereich insbesondere eine keilförmige Ausführung gegeben sein.

Eine weitere Lehre der Erfindung sieht vor, dass die Zusatzeinrichtung auf einem Speicher angeordnet ist, der im Gehäuse, in der zu verlegenden Rohrleitung oder in einem Bereich des Startpunkts angeordnet ist. Auf diese Weise kann die Zusatzeinrichtung einfach der Einführöffnung der Führung zugeführt werden, um auf einfache Weise eine notwendige temporäre Öffnung zu schaffen.

Eine weitere Lehre der Erfindung sieht vor, dass das Verdrängungselement so ausgeführt ist, dass dessen äußeres Ende während des Verlegens der Rohleitung im Boden befindlich ist. Hierdurch wird gewährleistet, dass der Boden oberhalb der Rohrleitung bzw. oberhalb der Zusatzeinrichtung in seinem Aufbau unverändert bleibt.

Eine weitere Lehre der Findung sieht vor, es sich bei der Zusatzeinrichtung um eine Rohrleitung oder um eine Steuerleitung handelt. Hierbei kann es sich beispielsweise um Be- oder Entlüftungsleitungen und dergleichen handeln.

Im Hinblick auf das Verfahren sieht die erfindungsgemäße Lösung vor, dass die Zusatzeinrichtung aus dem Gehäuse heraus der Führung zugeführt wird. Ansonsten erfolgt das Verfahren wie zuvor im Hinblick auf die Vorrichtung beschrieben wurde.

Anschließend wird die Erfindung anhand eines bevorzugten Ausführungsbeispiels in Verbindung mit einer Zeichnung näher erläutert. Dabei zeigen:
- Fig. 1: eine geschnittene Seitenansicht der erfindungsgemäßen Vorrichtung, und
- Fig. 2: eine Frontansicht zu Fig. 1.

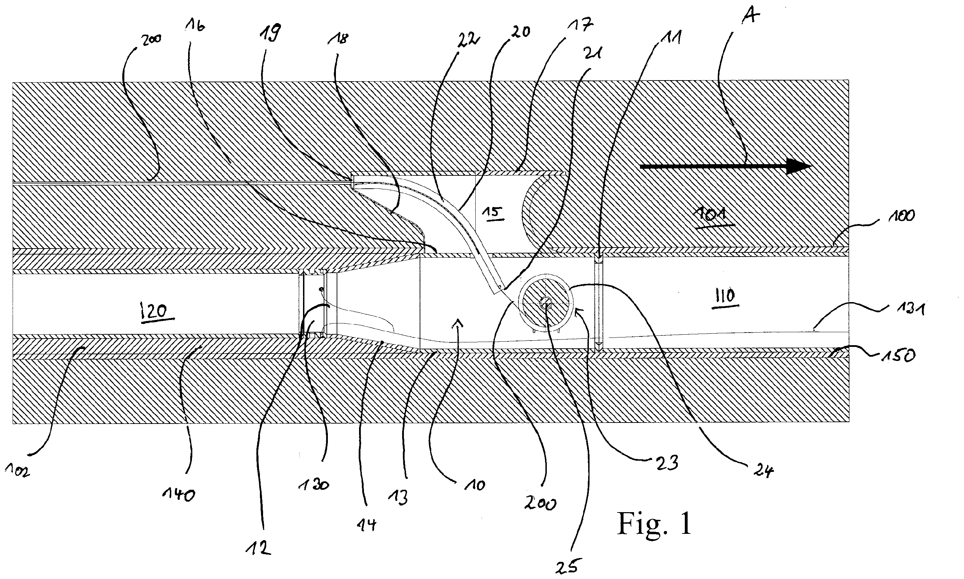

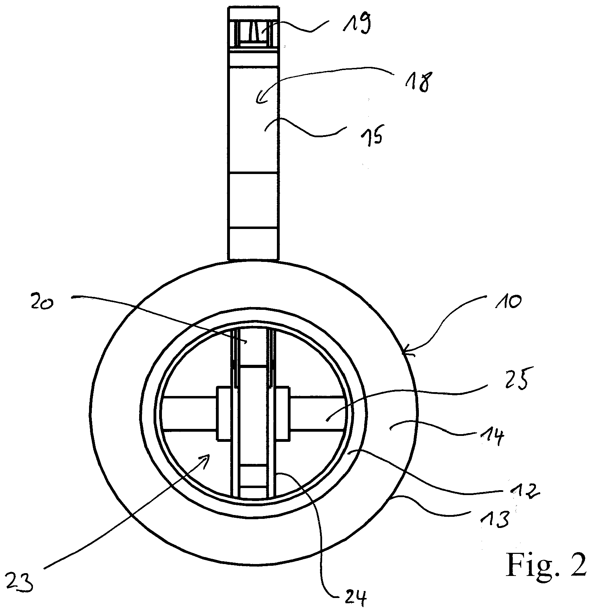

Fig. 1 und Fig. 2 zeigen einen erfindungsgemäßen Zugkopf 10 als Bestandteil eines Verlegesystems für eine Rohrleitung in den Boden von einem Startpunkt zu einem Zielpunkt entlang einer vorgegebenen Verlegelinie, insbesondere beim oberflächennahen Verlegen von Rohrleitungen in Form von Erdkabeln oder Erdleitungen im Boden mit einem Anschluss 11 für Bohrrohre 110 und einem Anschluss 12 für Schutzrohre 120. Vor den Bohrrohren 110 ist eine Vorrichtung (beispielsweise eine Bohrvorrichtung) zum Erstellen einer Öffnung (beispielsweise Bohrloch 100) im Boden 101 vorgesehen.

Zwischen dem Schutzrohr 120 und dem Anschluss 12 ist ein Verpressring 130 zum Einbringen von Mörtel 140 angeordnet. Das Verbinden der Bohrrohre 110 bzw. Schutzrohre 120 kann über Schweißen oder Schraubverbindungen erfolgen. Der Verpressring 130 ist mit einer Verpressleitung 131 verbunden, über die der Mörtel 140 dem Verpressring 130 zugeführt wird. Das Bohrrohr 110 befindet sich in einem Bohrloch 100, dass im Boden 101 mit einer Bohrvorrichtung (nicht dargestellt) aufgefahren wird. Zwischen Bohrrohr 110 und dem Bohrloch 100 befindet sich ein Schmierfilm 150, beispielsweise aus Bentonit.

Der Zugkopf 10 weist ein Gehäuse 13 auf, das einen konischen Abschnitt 14 aufweist, um den Durchmesserunterschied zwischen Bohrrohr 110 und Schutzrohr 120 auszugleichen. Der Überschnittbereich 102, der durch die unterschiedlichen Durchmesser der Bohrrohre 110 und Schutzrohre 120 zwangsläufig entsteht, wird hinter dem Zugkopf über den Verpressring 130 durch den Mörtel 140 aufgefüllt.

Am Gehäuse 13 ist ein Verdrängungselement 15 angeordnet. Das Verdrängungselement 15 fungiert hier wie ein Schwert oder Pflug, das, wenn der Zugkopf 10 in Pfeilrichtungen A durch das Bohrloch 100 bewegt wird, eine temporäre Öffnung im Boden 101 erzeugt, in die eine Zusatzeinrichtung 200 einbringbar ist. Das Verdrängungselement 15 ist am Gehäuse 13 mit seinem inneren Ende 16 angeordnet. Die Befestigung des inneren Endes 16 am Gehäuse 13 kann beispielsweise über Schweißen oder über eine Schraubverbindung erfolgen. Das Verdrängungselement 15 weist ein äußeres Ende 17 auf. Die Länge des Verdrängungselementes 15 ist dabei so vorgesehen, dass das äußere Ende 17 im Boden 101 verbleibt. An seiner Rückseite 18 weist das Verdrängungselement 15 eine Abgabeöffnung 19 auf. Die Abgabeöffnung 19 ist mit einer Führung 20 verbunden, die sich durch das Verdrängungselement 15 hindurch in das Gehäuse 13 beispielsweise in Form eines Kanals, erstreckt. Die Führung 20 weist eine Zuführöffnung 21 auf. Die Zusatzeinrichtung 200 wird der Führung 20 über die Zuführöffnung 21 zugeführt. Weiterhin wird die Zusatzeinrichtung 200 durch den Innenraum 22 der Führung 20 der Abgabeöffnung 19 zugeführt und von da in die temporäre Öffnung im Boden 101 abgegeben.

Der Abstand der verlegten Zusatzeinrichtung 200 zum Schutzrohr 120 kann durch eine Längenänderung des Verdrängungselementes 15 eingestellt werden. Hierbei können beispielsweise unterschiedlich lange Verdrängungselemente 15 oder Distanzstücke (nicht dargestellt) vorgesehen werden.

Auf einem Speicher 23, bei dem es sich hier um eine Trommel 24 handelt, die drehbar auf einer Achse 25 angeordnet ist, ist die Zusatzeinrichtung aufgetrommelt. Während des Einziehvorgangs in Pfeilrichtungen A wird das Zusatzeinrichtung 200 von der Trommel 24 abgetrommelt und durch die Führung 20 und die Abgabeöffnung 19 der temporären Öffnung im Boden 101 oberhalb der Schutzrohre 120 zugeführt. Alternativ kann der Speicher 23 auch am Startpunkt vorgesehen sein und die Zusatzeinrichtung 200 dann der Führung 20 entweder durch das Schutzrohr 120 oder das Bohrrohr 110 zugeführt werden.

Alternativ zu dem hier gezeigten Verfahren, dass die Zusatzeinrichtung 200 während des Einbringens des Schutzrohres 120 und damit der Rohrleitung in den Boden 101 eingebracht wird, ist es auch möglich, dass die Zusatzeinrichtung 200 bereits während des Erstellens der Öffnung in den Boden 101, also beispielsweise während des Bohrens, einzubringen. Dafür kann das beschriebene Verdrängungselement 15 beispielsweise direkt an einer Bohrvorrichtung oder an bzw. im Bohrrohrstrang als solches oder auch an der Rohrleitung selber angeordnet werden. Dieses wäre beispielsweise beim Microtunneling oder beim Anwenden des Directpipe-Verfahrens der Fall.

### Bezugszeichenliste:

| | | | |
|---|---|---|---|
| 10 | Zugkopf | 25 | Achse |
| 11 | Anschlag | | |
| 12 | Anschlag | 100 | Bohrloch |
| 13 | Gehäuse | 101 | Boden |
| 14 | konischer Bereich | 102 | Überschnittbereich |
| 15 | Verdrängungselement | 110 | Bohrrohr |
| 16 | inneres Ende | 120 | Schutzrohr |
| 17 | äußeres Ende | 130 | Verpressring |
| 18 | Rückseite | 131 | Verpressleitung |
| 19 | Abgabeöffnung | 140 | Mörtel |
| 20 | Führung | 150 | Schmierfilm |
| 21 | Zuführöffnung | 200 | Zusatzeinrichtung |
| 22 | Innenraum | | |
| 23 | Speicher | A | Pfeilrichtung |
| 24 | Trommel | | |

## Patentansprüche

1. Vorrichtung zum Einbringen einer Zusatzeinrichtung (200) im Boden (101) im Wesentlichen parallel beabstandet zu einer Rohrleitung (120) außerhalb dieser beim Einbringen der Rohrleitung (120) in den Boden (101) mit einem vollständig unterirdischen Verlegeverfahren von einem Startpunkt zu einem Zielpunkt entlang einer vorgegebenen Verlegelinie, mit einem Gehäuse (13), das sich beim Einbringen der Rohrleitung (120) im Boden (101) befindet, mit einem Verdrängungselement (15) zum abschnittweise Verdrängen des Bodens (101) zum Bereitstellen einer temporären Öffnung im Boden (101) zum Einlegen der Zusatzeinrichtung (200), wobei das Verdrängungselement (15) an dem Gehäuse (13) angeordnet ist, und wobei das Verdrängungselement (15) eine Führung (20) zum Führen und Abgeben der Zusatzeinrichtung (200) aufweist, und mit einem Speicher (23) auf dem die Zusatzeinrichtung (200) anordbar ist, wobei die Zusatzeinrichtung (200) aus dem Gehäuse (13) heraus der Führung (20) zuführbar ist, **dadurch gekennzeichnet, dass** das Gehäuse (13) so ausgeführt ist, dass es während des Einbringens der Rohrleitung (120) verbindungsfrei zur darüberliegenden Oberfläche des Bodens (101) ist, dass die Zusatzeinrichtung (200) auf dem Speicher (23) angeordnet ist, der im Gehäuse (13), in der zu verlegenden Rohrleitung (110, 120) oder in einem Bereich des Startpunkts angeordnet ist, und dass die Führung (20) so angeordnet ist, dass die Zusatzeinrichtung (200) direkt oberhalb der Rohrleitung (110, 120) abgebbar ist.

2. Vorrichtung nach Anspruch 1, **dadurch gekennzeichnet, dass** es sich bei dem Gehäuse (13) um ein Rohrelement, eine Vorrichtung zum Erstellen einer Öffnung im Boden oder einen Zugkopf (10) handelt.

3. Vorrichtung nach Anspruch 2, **dadurch gekennzeichnet, dass** der Zugkopf (10) einen ersten Anschluss (12) für die zu verlegende Rohrleitung (120) und einen zweiten Anschluss (11) für Bohrrohre (110) oder für eine Vorrichtung zum Erstellen einer Öffnung im Boden aufweist.

4. Vorrichtung nach einem der Ansprüche 1 bis 3, **dadurch gekennzeichnet, dass** die Führung (20) im Inneren des Verdrängungselements (15) vorgesehen ist.

5. Vorrichtung nach einem der Ansprüche 1 bis 4, **dadurch gekennzeichnet, dass** die Führung (20) eine Abgabeöffnung (19) aufweist, die entgegen einer Bewegungsrichtung (A) der Vorrichtung (10) weist.

6. Vorrichtung nach einem der Ansprüche 1 bis 5, **dadurch gekennzeichnet, dass** das Verdrängungselement (15) so ausgeführt ist, dass dessen äußeres Ende (17) während des Verlegens der Rohrleitung (120) vollständig im Boden (101) befindlich ist.

7. Vorrichtung nach einem der Ansprüche 1 bis 6, **dadurch gekennzeichnet, dass** die Zusatzeinrichtung eine Rohrleitung oder eine Steuerleitung ist.

8. Verfahren zum Einbringen einer Zusatzeinrichtung (200) im Boden (101) im Wesentlichen parallel beabstandet zu einer Rohrleitung (110, 120) außerhalb dieser beim Einbringen der Rohrleitung (110, 120) in den Boden mit einem vollständig unterirdischen Verlegeverfahren von einem Startpunkt zu einem Zielpunkt entlang einer vorgegebenen Verlegelinie, bei dem mit einem Verdrängungselement (15) abschnittweise der Boden (101) verdrängt wird, wodurch eine temporäre Öffnung im Boden (101) erzeugt wird, in die die Zusatzeinrichtung (200) eingelegt wird, wobei das Verdrängungselement (15) an einem im Boden befindlichen Gehäuse (13) angeordnet ist, und eine Führung (20) zum Führen und Abgeben der Zusatzeinrichtung (200) vorgesehen ist, durch die die Zusatzeinrichtung (200) in die temporäre Öffnung eingebracht wird, wobei die Zusatzeinrichtung (200) aus dem Gehäuse (13) heraus der Führung (20) zugeführt wird, **dadurch gekennzeichnet, dass** das Gehäuse 13 verbindungsfrei zur darüberliegenden Oberfläche ist, dass die Zusatzeinrichtung (200) auf einem Speicher (23) angeordnet ist, der im Gehäuse (13), in der zu verlegenden Rohrleitung (110, 120) oder in einem Bereich des Startpunkts angeordnet wird, und dass die Führung (20) so angeordnet ist, dass das Zusatzeinrichtung (200) direkt oberhalb der Rohrleitung (110, 120) abgegeben wird.

9. Verfahren nach Anspruch 8, **dadurch gekennzeichnet, dass** die Zusatzeinrichtung eine Rohrleitung oder eine Steuerleitung ist.

10. Verfahren nach Anspruch 8 oder 9, **dadurch gekennzeichnet, dass** das Verfahren mit einer Vorrichtung nach den Patentansprüchen 1 bis 7 durchgeführt wird.

## Claims

1. Device for introducing an additional device (200) in the earth (101) spaced apart in a substantially parallel manner from a pipeline (120) and outside the latter during the introduction of the pipeline (120) into the earth (101) by way of a completely underground laying method from a starting point to a finishing point along a predefined laying line, having a housing (13) which is situated in the earth (101) during the introduction of the pipeline (120), having a displacement element (15) for sectional displacement of the earth (101) for providing a temporary opening in the earth (101) for insertion of the additional device (200), wherein the displacement element (15) is arranged on the housing (13), and wherein the displacement element (15) has a guide (20) for guiding and delivering the additional device (200), and having a storage means (23) on which the additional device (200) can be arranged, wherein the additional device (200) can be fed to the guide (20) out of the housing (13), **characterized in that** the housing (13) is designed in such a way that, during the introduction of the pipeline (120), it has no connection with respect to the overlying surface of the earth (101), **in that** the additional device (200) is arranged on the storage means (23), which is arranged in the housing (13), in the pipeline (110, 120) to be laid or in a region of the starting point, and **in that** the guide (20) is arranged in such a way that the additional device (200) can be delivered directly above the pipeline (110, 120).

2. Device according to Claim 1, **characterized in that** the housing (13) is a pipe element, a device for producing an opening in the earth, or a pull head (10).

3. Device according to Claim 2, **characterized in that** the pull head (10) has a first connection (12) for the pipeline (120) to be laid and has a second connection (11) for drill pipes (110) or for a device for producing an opening in the earth.

4. Device according to one of Claims 1 to 3, **characterized in that** the guide (20) is provided in the interior of the displacement element (15).

5. Device according to one of Claims 1 to 4, **characterized in that** the guide (20) has a delivery opening (19) which points counter to a movement direction (A) of the device (10).

6. Device according to one of Claims 1 to 5, **characterized in that** the displacement element (15) is designed in such a way that, during the laying of the pipeline (120), its outer end (17) is situated completely in the earth (101).

7. Device according to one of Claims 1 to 6, **characterized in that** the additional device is a pipeline or a control line.

8. Method for introducing an additional device (200) in the earth (101) spaced apart in a substantially parallel manner from a pipeline (110, 120) and outside the latter during the introduction of the pipeline (110, 120) into the earth by way of a completely underground laying method from a starting point to a finishing point along a predefined laying line, in which method the earth (101) is sectionally displaced by a displacement element (15), which produces a temporary opening in the earth (101), into which opening the additional device (200) is inserted, wherein the displacement element (15) is arranged on a housing (13) which is situated in the earth and provision is made of a guide (20) for guiding and delivering the additional device (200), by way of which guide the additional device (200) is introduced into the temporary opening, wherein the additional device (200) is fed to the guide (20) out of the housing (13), **characterized in that** the housing (13) has no connection with respect to the overlying surface, **in that** the additional device (200) is arranged on a storage means (23), which is arranged in the housing (13), in the pipeline (110, 120) to be laid or in a region of the starting point, and **in that** the guide (20) is arranged in such a way that the additional device (200) is delivered directly above the pipeline (110, 120).

9. Method according to Claim 8, **characterized in that** the additional device is a pipeline or a control line.

10. Method according to Claim 8 or 9, **characterized in that** the method is carried out using a device according to Patent Claims 1 to 7.

## Revendications

1. Dispositif pour l'installation d'un appareil supplémentaire (200) dans le sol (101) essentiellement parallèlement à distance d'une canalisation (120) à l'extérieur de celle-ci lors de l'installation de la canalisation (120) dans le sol (101) avec un procédé de pose entièrement souterrain d'un point de départ à un point d'arrivée le long d'une ligne de pose prédéterminée, comprenant un boîtier (13), qui se trouve dans le sol (101) lors de l'installation de la canalisation (120), comprenant un élément de refoulement (15) pour refouler le sol (101) par sections afin de fournir une ouverture temporaire dans le sol (101) pour la pose de l'appareil supplémentaire (200), l'élément de refoulement (15) étant agencé sur le boîtier (13), et l'élément de refoulement (15) présentant un guide (20) pour guider et décharger l'appareil supplémentaire (200), et comprenant un réservoir (23) sur lequel l'appareil supplémentaire (200) peut être agencé, l'appareil supplémentaire (200) pouvant être acheminé depuis le boîtier (13) vers le guide (20), **caractérisé en ce que** le boîtier (13) est réalisé de telle sorte que, pendant l'installation de la canalisation (120), il n'est pas relié à la surface du sol (101) située au-dessus, **en ce que** l'appareil supplémentaire (200) est agencé sur le réservoir (23), qui est agencé dans le boîtier (13), dans la canalisation (110, 120) à poser ou dans une zone du point de départ, et **en ce que** le guide (20) est agencé de telle sorte que l'appareil supplémentaire (200) peut être déchargé directement au-dessus de la canalisation (110, 120).

2. Dispositif selon la revendication 1, **caractérisé en ce que** le boîtier (13) consiste en un élément tubulaire, un dispositif pour créer une ouverture dans le sol ou le boîtier d'une tête de traction (10).

3. Dispositif selon la revendication 2, **caractérisé en ce que** la tête de traction (10) présente un premier raccord (12) pour la canalisation (120) à poser et un deuxième raccord (11) pour des tubes de forage (110) ou pour un dispositif pour créer une ouverture dans le sol.

4. Dispositif selon l'une quelconque des revendications 1 à 3, **caractérisé en ce que** le guide (20) est prévu à l'intérieur de l'élément de refoulement (15).

5. Dispositif selon l'une quelconque des revendications 1 à 4, **caractérisé en ce que** le guide (20) présente une ouverture de déchargement (19), qui est orientée à l'opposé de la direction de déplacement (A) du dispositif (10).

6. Dispositif selon l'une quelconque des revendications 1 à 5, **caractérisé en ce que** l'élément de refoulement (15) est réalisé de telle sorte que son extrémité extérieure (17) se trouve entièrement dans le sol (101) pendant la pose de la canalisation (120).

7. Dispositif selon l'une quelconque des revendications 1 à 6, **caractérisé en ce que** l'appareil supplémentaire est une canalisation ou une ligne de commande.

8. Procédé d'installation d'un appareil supplémentaire (200) dans le sol (101) essentiellement parallèlement à distance d'une canalisation (110, 120) à l'extérieur de celle-ci lors de l'installation de la canalisation (110, 120) dans le sol avec un procédé de pose entièrement souterrain d'un point de départ à un point d'arrivée le long d'une ligne de pose prédéterminée, selon lequel le sol (101) est refoulé par sections avec un élément de refoulement (15), ce qui produit une ouverture temporaire dans le sol (101), dans laquelle l'appareil supplémentaire (200) est inséré, l'élément de refoulement (15) étant agencé sur un boîtier (13) se trouvant dans le sol, et un guide (20) étant prévu pour guider et décharger l'appareil supplémentaire (200), par lequel l'appareil supplémentaire (200) est installé dans l'ouverture temporaire, l'appareil supplémentaire (200) étant acheminé depuis le boîtier (13) vers le guide (20), **caractérisé en ce que** le boîtier (13) n'est pas relié à la surface située au-dessus, **en ce que** l'appareil supplémentaire (200) est agencé sur un réservoir (23), qui est agencé dans le boîtier (13), dans la canalisation (110, 120) à poser ou dans une zone du point de départ, et **en ce que** le guide (20) est agencé de telle sorte que l'appareil supplémentaire (200) est déchargé directement au-dessus de la canalisation (110, 120).

9. Procédé selon la revendication 8, **caractérisé en ce que** l'appareil supplémentaire est une canalisation ou une ligne de commande.

10. Procédé selon la revendication 8 ou 9, **caractérisé en ce que** le procédé est effectué avec un dispositif selon les revendications 1 à 7.
